# EUROPÄISCHE PATENTANMELDUNG

(11) **EP 4 782 728 A1**
(43) Veröffentlichungstag der Anmeldung: **29.07.2026**
(21) Anmeldenummer: 26152885.5
(22) Anmeldetag: 20.01.2026
(51) Int. Cl.: F16K 1/12, F16K 7/02, F16K 7/20

(54) **KÄLTEMITTELVENTIL**

(30) Priorität: 22.01.2025 DE 102025102239
(71) Anmelder: Volkswagen Aktiengesellschaft, 38436 Wolfsburg (DE)
(72) Erfinder: Schultze, Tonio-Erik, 38440 Wolfsburg (DE)
(74) Vertreter: RGTH

(57) **Zusammenfassung**

Um ein Kältemittelventil mit einem Ventilgehäuse bereitzustellen, welches einfachere Bauteilgeometrien und eine kompaktere Bauform aufweist, wird ein Kältemittelventil (100) umfassend ein Ventilgehäuse (10) und einen Antrieb (11) vorgeschlagen, wobei das Ventilgehäuse (10) einen Kältemittelkanal (13) mit mindestens einer Einlassöffnung (14) und einer Auslassöffnung (15) für ein Kältemittel aufweist, wobei in dem Kältemittelkanal (13) ein Steuerelement (17) angeordnet ist, wobei zwischen dem Steuerelement (17) und einer Innenwand (18) des Kältemittelkanals (13) ein Steuerspalt (19) ausgebildet ist, wobei vorgesehen ist, dass zur Steuerung des Steuerspalts (19) ein Durchmesser (23) des Steuerelements (17) mittels des Antriebs (11) veränderbar ist.

## Beschreibung

Die vorliegende Erfindung betrifft ein Kältemittelventil umfassend ein Ventilgehäuse und einen Antrieb, wobei das Ventilgehäuse einen Kältemittelkanal mit mindestens einer Einlassöffnung und einer Auslassöffnung für ein Kältemittel aufweist, wobei in dem Kältemittelkanal ein Steuerelement angeordnet ist, wobei zwischen dem Steuerelement und einer Innenwand des Kältemittelkanals ein Steuerspalt ausgebildet ist.

In Kältemittelkreisläufen, insbesondere in Kältemittelkreisläufen von modernen batterieelektrischen Kraftfahrzeugen, werden Kältemittelventile in hoher Stückzahl eingesetzt. Aus dem Stand der Technik bekannte Kältemittelventile umfassen ein Ventilgehäuse mit einem darin angeordneten Kältemittelkanal. Dem Kältemittelkanal kann ein Kältemittel durch mindestens eine Einlassöffnung zugeführt und aus einer Auslassöffnung abgeführt werden. In dem Kältemittelkanal ist eine Ventilnadel vorgesehen, welche axial von einem Antrieb, beispielsweise einem Elektromotor, in dem Kältemittelkanal verfahren werden kann. Zur Steuerung der Durchflussmenge eines Kältemittels durch den Kältemittelkanal weist die Ventilnadel eine verjüngende Kontur auf, das heißt, deren Durchmesser nimmt in Richtung der Auslassöffnung hin ab. Das Ventilgehäuse weist im Kältemittelkanal zudem einen Hinterschnitt im Bereich der Auslassöffnung auf. Das Ventilgehäuse mit Hinterschnitt bildet an der Auslassöffnung einen Dichtsitz für die Ventilnadel. Wird die Ventilnadel in den Dichtsitz eingefahren, so schließt das Kältemittelventil. Die zu bearbeitenden Geometrien des Ventilgehäuses und der Ventilnadel sind sehr komplex und daher kostenintensiv. Zudem wird aufgrund des Prinzips der bewegten Ventilnadel, bei Kältemitteln mit hohen Druckdifferenzen (z.B. CO₂), auch eine Stangendichtung oder Kolbendichtung benötigt.

Die DE 10 2006 029 267 A1 offenbart ein Regelventil für das Kältemittel R744 zur Regelung einer hohen Druckdifferenz zwischen einem Zu- und Ablauf des Kältemittels im Ventil mit einer Betätigungseinrichtung, die in einer im Ventil angeordneten und in axialer Richtung sich erstreckenden Führungsbohrung eine Betätigungsstange betätigt, die an ihrem dem Zu- und Ablauf zugewandten Ende einen Dichtkörper aufweist, wobei durch eine Hubbewegung der Betätigungsstange der Dichtkörper seinen Dichtsitz und damit den Zu- bzw. Ablauf öffnet bzw. verschließt.

Aus der EP 2 003 331 A1 sind eine Ventilanordnung für ein Einspritzventil und ein Einspritzventil für einen Brennraum einer Verbrennungskraftmaschine bekannt, mit einem Ventilkörper, der eine zentrale Längsachse aufweist, wobei der Ventilkörper einen Hohlraum aufweist, der eine Innenwand bildet, wobei der Hohlraum einen Fluidauslassabschnitt mit einem Sitzbereich aufweist, der Teil der Innenwand ist, eine Ventilnadel, die in dem Hohlraum axial beweglich ist, wobei die Ventilnadel in einer Schließposition einen Fluidstrom durch den Fluidauslassabschnitt verhindert und in weiteren Positionen den Fluidstrom in einer Fluidstromrichtung durch den Fluidauslassabschnitt freigibt.

Der vorliegenden Erfindung liegt die Aufgabe zugrunde, ein Kältemittelventil mit einem Ventilgehäuse bereitzustellen, welches einfachere Bauteilgeometrien und eine kompaktere Bauform aufweist.

Zur Lösung der der Erfindung zugrundeliegenden Aufgabe wird ein Kältemittelventil umfassend ein Ventilgehäuse und einen Antrieb vorgeschlagen, wobei das Ventilgehäuse einen Kältemittelkanal mit mindestens einer Einlassöffnung und einer Auslassöffnung für ein Kältemittel aufweist, wobei in dem Kältemittelkanal ein Steuerelement angeordnet ist, wobei zwischen dem Steuerelement und einer Innenwand des Kältemittelkanals ein Steuerspalt ausgebildet ist, wobei vorgesehen ist, dass zur Steuerung des Steuerspalts ein Durchmesser des Steuerelements mittels des Antriebs veränderbar ist.

Unter einer Steuerung des Steuerspalts wird dabei eine Vergrößerung beziehungsweise Verkleinerung des Steuerspalts verstanden, sodass eine Durchflussmenge eines Kältemittels durch den Kältemittelkanal, insbesondere von der mindestens einen Einlassöffnung zu der Auslassöffnung, gesteuert oder geregelt werden kann.

Der Kältemittelkanal erstreckt sich bevorzugt entlang einer Axialrichtung. Der Durchmesser des Steuerelementes liegt weiter bevorzugt in einer Ebene senkrecht zur Axialrichtung.

Vorteilhaft kann vorgesehen sein, dass der Steuerspalt ringförmig zwischen der Innenwand des Kältemittelkanals und dem Steuerelement ausgebildet ist.

Erfindungsgemäß ist vorgesehen, dass zur Steuerung des Steuerspalts ein Durchmesser des Steuerelementes mittels des Antriebs veränderbar ist. Dies kann insbesondere bedeuten, dass bei einer Vergrößerung des Durchmessers der bevorzugt ringförmig ausgebildete Steuerspalt kleiner beziehungsweise schmaler wird. Bei maximaler Durchmesservergrößerung des Steuerelementes verschwindet der Steuerspalt beziehungsweise wird dieser geschlossen. Bei einer Verkleinerung oder Verringerung des Durchmessers des Steuerelementes wird der bevorzugt ringförmig ausgebildete Steuerspalt vergrößert, sodass die Durchflussmenge des Kältemittelventils von der mindestens einen Einlassöffnung zur Auslassöffnung erhöht wird.

Gegenüber dem Stand der Technik ist bei dem erfindungsgemäßen Kältemittelventil insbesondere keine Ventilnadel vorgesehen. Somit können die Bauteilgeometrien, insbesondere die Geometrie des Kältemittelkanals, vereinfacht ausgeführt werden. Hinterschnitte werden im Kältemittelkanal nicht benötigt.

Bevorzugt ist vorgesehen, dass das Steuerelement eine axiale Länge aufweist, wobei die axiale Länge mittels des Antriebs veränderbar ist, wobei eine Verringerung der axialen Länge zu einer Vergrößerung des Durchmessers des Steuerelements führt.

Die axiale Länge des Steuerelementes betrifft dabei bevorzugt die Ausdehnung des Steuerelements in Richtung der Axialrichtung des Kältemittelkanals. Wird die axiale Länge des Steuerelementes mittels des Antriebs verringert, so wird gleichzeitig eine Vergrößerung des Durchmessers des Steuerelementes bewirkt. Umgekehrt führt eine Vergrößerung der axialen Länge zu einer Verringerung des Durchmessers des Steuerelementes und somit zu einer größeren Durchflussmenge von Kältemittel durch den Kältemittelkanal.

Bevorzugt ist vorgesehen, dass der Kältemittelkanal zylindrisch ist, und/oder dass der Kältemittelkanal eine Bohrung ist.

Der Kältemittelkanal kann somit besonders einfach ausgeführt werden und bedarf insbesondere keiner Hinterschnitte oder ähnlicher komplexer Geometrien. Insbesondere kann der Kältemittelkanal einen konstanten Durchmesser über dessen gesamte axiale Länge aufweisen.

Mit weiterem Vorteil ist vorgesehen, dass das Steuerelement einen ersten Abschnitt und einen zweiten Abschnitt aufweist, wobei zwischen dem ersten Abschnitt und dem zweiten Abschnitt ein Verformungsabschnitt angeordnet ist, wobei der zweite Abschnitt relativ zum ersten Abschnitt mittels des Antriebs verfahrbar ist.

Der erste Abschnitt kann ein Bereich des Steuerelementes oder ein einzelnes Bauteil des Steuerelementes sein. Ebenso kann der zweite Abschnitt ein Bereich oder ein einzelnes Bauteil des Steuerelementes sein. Zwischen dem ersten Abschnitt und dem zweiten Abschnitt ist ein Verformungsabschnitt angeordnet. Wird der zweite Abschnitt relativ zum ersten Abschnitt mittels des Antriebs verfahren, wird insbesondere ein Abstand zwischen dem ersten und dem zweiten Abschnitt vergrößert oder verringert, so wird damit die axiale Länge des Steuerelementes vergrößert oder verringert und entsprechend der Durchmesser des Steuerelementes verringert beziehungsweise vergrößert. Die Verringerung beziehungsweise Vergrößerung des Durchmessers des Steuerelementes wird dabei durch Verformung des Verformungsabschnitts bereitgestellt. Bezüglich der Axialrichtung des Kältemittelkanals und/oder bezüglich der axialen Länge des Steuerelementes sind der erste Abschnitt und der zweite Abschnitt über- beziehungsweise untereinander angeordnet. Der erste Abschnitt kann dabei insbesondere näher an der mindestens einen Einlassöffnung angeordnet sein, während der zweite Abschnitt des Steuerelementes sich näher an der Auslassöffnung des Kältemittelkanals befindet.

Bevorzugt ist vorgesehen, dass der Antrieb ein Elektromotor mit einer Rotorwelle ist, dass das Steuerelement ein Bewegungsgewinde umfasst, wobei das Bewegungsgewinde eine Drehbewegung der Rotorwelle in eine Axialbewegung des zweiten Abschnitts umwandelt.

Mittels des Bewegungsgewindes wird eine Drehbewegung der Rotorwelle in eine Axialbewegung des zweiten Abschnitts umgewandelt, sodass sich der Abstand zwischen dem ersten Abschnitt und dem zweiten Abschnitt verändert und somit der Durchmesser, insbesondere des Verformungsabschnitts, verringert beziehungsweise vergrößert werden kann.

Grundsätzlich ist es auch möglich, dass der Antrieb ein pneumatischer Antrieb ist. In diesem Fall kann das Steuerelement ein von dem pneumatischen Antrieb mit Druck beaufschlagbarer Ballon sein. Durch Erhöhung des Drucks innerhalb des Ballons wird dessen Durchmesser vergrößert und dadurch der Steuerspalt verkleinert.

Mit besonderem Vorteil kann vorgesehen sein, dass das Steuerelement, insbesondere der zweite Abschnitt, einen Niet, insbesondere einen Gewindeniet, umfasst, wobei der Niet von dem Bewegungsgewinde axial bewegt wird, wobei der Niet bevorzugt verdrehfest mit dem Steuerelement verbunden ist.

Dabei kann insbesondere das Gewinde des Gewindeniets in dem Bewegungsgewinde angeordnet sein. Aufgrund der Wechselwirkung des Gewindes des Gewindeniets und eines Innengewindes des Bewegungsgewindes kann eine Drehbewegung der Rotorwelle in eine axiale Bewegung des zweiten Abschnitts, insbesondere des Gewindeniets, umgewandelt werden.

Mit weiterem Vorteil ist vorgesehen, dass das Steuerelement ein Spreizkörper ist.

Bevorzugt ist dabei der Verformungsabschnitt des Spreizkörpers in etwa in Form eines Faltenbalgs ausgebildet.

Mit weiterem Vorteil kann vorgesehen sein, dass das Steuerelement, insbesondere der erste Abschnitt, lagefest mit dem Ventilgehäuse verbunden ist, wobei das Steuerelement, insbesondere der erste Abschnitt, bevorzugt ein Führungsrohr umfasst, wobei das Führungsrohr lagefest mit dem Ventilgehäuse verbunden ist, wobei die Rotorwelle in dem Führungsrohr angeordnet ist.

Die lagefeste Verbindung des ersten Abschnitts mit dem Ventilgehäuse ist dabei bevorzugt drehfest und druckdicht ausgebildet. Insbesondere ist der erste Abschnitt des Steuerelementes nicht axial innerhalb des Kältemittelkanals verschiebbar oder verfahrbar. Der erste Abschnitt kann dabei ein Führungsrohr umfassen, welches drehfest, druckdicht und axial nicht verschiebbar mit dem Ventilgehäuse verbunden ist. Die Rotorwelle ist in diesem Fall bevorzugt durch das Führungsrohr hindurchgeführt, sodass eine Drehbewegung des Rotors über die in dem Führungsrohr angeordnete Rotorwelle und das Bewegungsgewinde auf den zweiten Abschnitt, insbesondere den Niet, des Steuerelementes übertragen werden kann.

Grundsätzlich ist es auch möglich, dass der erste Abschnitt des Steuerelementes ohne ein Führungsrohr direkt mit dem Ventilgehäuse verbunden ist. Auch in diesem Fall ist die Verbindung drehfest und druckdicht ausgeführt. Für die Verbindung kann eine Press-, Schweiß-, Klebe- oder äquivalente Verbindung vorgesehen sein.

Mit weiterem Vorteil ist vorgesehen, dass das Steuerelement ein Druckausgleichsmittel, insbesondere eine Öffnung oder ein Druckausgleichsventil, umfasst, wobei das Druckausgleichsmittel bevorzugt in dem Niet angeordnet ist.

Aufgrund der Veränderung der axialen Länge und/oder des Durchmessers des Steuerelementes kann auch eine Änderung des Innenvolumens des Steuerelementes auftreten. Um hierbei auftretende Druckänderungen auszugleichen, weist das Steuerelement ein Druckausgleichsmittel, insbesondere eine Öffnung oder ein Druckausgleichsventil, auf. Dieses kann entweder in dem Niet oder im zweiten Abschnitt des Steuerelementes, insbesondere des Spreizkörpers, angeordnet sein. Im einfachsten Fall kann das Druckausgleichsmittel ein kleines Loch oder eine kleine Öffnung sein. Die Öffnung kann ein mittiger Kanal im Niet sein. Dies ist insbesondere dann vorteilhaft, wenn das Bewegungsgewinde keine Dichtfunktion hat.

In einer weiteren Ausführungsform kann vorgesehen sein, dass der erste Abschnitt eine erste Platte umfasst, dass der zweite Abschnitt eine zweite Platte umfasst, und dass der Verformungsabschnitt ein elastischer Quetschkörper ist.

Wird die zweite Platte in Richtung der ersten Platte mittels des Antriebs verfahren oder bewegt, so wird der zwischen der ersten und der zweiten Platte angeordnete elastische Quetschkörper in der Axialrichtung zusammengedrückt, wodurch dieser seinen Durchmesser ändert.

Die Erfindung wird nachstehend näher anhand der beigefügten Figuren erläutert. Es zeigen:
- Fig. 1: ein Kältemittelventil mit einem Ventilgehäuse und einem Steuerelement,
- Fig. 2a: eine Detailansicht des Ventilgehäuses mit Steuerelement bei geschlossenem Kältemittelventil,
- Fig.2b: die Detailansicht des Ventilgehäuses mit Steuerelement bei geöffnetem Ventil,
- Fig. 3a: eine Detailansicht des Ventilgehäuses mit einer Variante des Steuerelementes bei geschlossenem Kältemittelventil, und
- Fig. 3b: die Detailansicht des Ventilgehäuses mit der Variante des Steuerelementes bei geöffnetem Ventil.

In den Figuren sind gleiche oder einander entsprechende Elemente mit denselben Bezugszeichen gekennzeichnet.

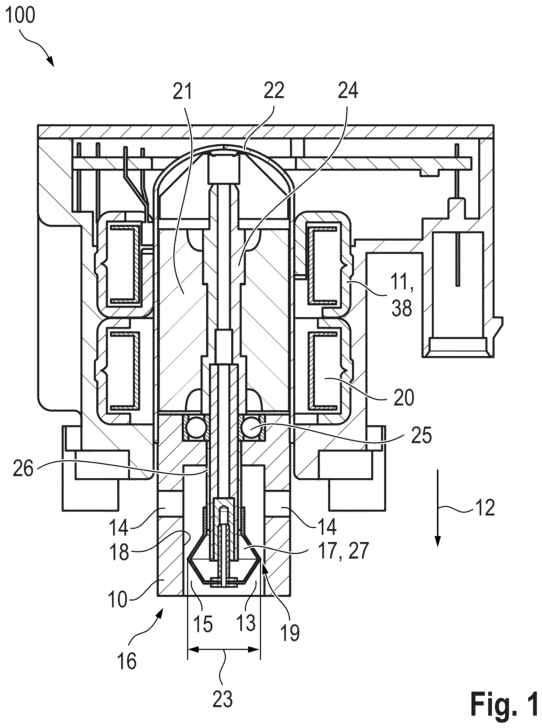

Fig. 1 zeigt ein Kältemittelventil 100 umfassend ein Ventilgehäuse 10 und einen Antrieb 11. Das Ventilgehäuse 10 weist einen sich in einer Axialrichtung 12 erstreckenden Kältemittelkanal 13 auf, welcher Einlassöffnungen 14 und eine Auslassöffnung 15 umfasst. Die Einlassöffnungen 14 sind radial ausgerichtet, die Auslassöffnung 15 befindet sich am axial unteren Ende 16 des Kältemittelkanals 13. In dem Kältemittekanal 13 ist ein Steuerelement 17 angeordnet, wobei zwischen dem Steuerelement 17 und einer Innenwand 18 des Kältemittelkanals 13 ein Steuerspalt 19 ausgebildet ist. Der Antrieb 11 ist als Elektromotor 38 umfassend einen Stator 20 und einen Rotor 21 ausgebildet. Zur Trennung des kältemittelführenden Bereichs und des trockenen Bereichs ist ein Spalttopf 22 vorgesehen, wobei der Rotor 21 innerhalb des Spalttopfs 22 angeordnet ist und der Stator 20 außerhalb des Spalttopfs 22 angeordnet ist. Mittels des Antriebs 11 kann zur Steuerung des Steuerspalts 19 ein Durchmesser 23 des Steuerelementes 17 verändert werden. Die Rotorwelle 24 des Rotors 21 ist in einem Wälzlager 25 gelagert und durch ein Führungsrohr 26 des Steuerelementes 17 geführt.

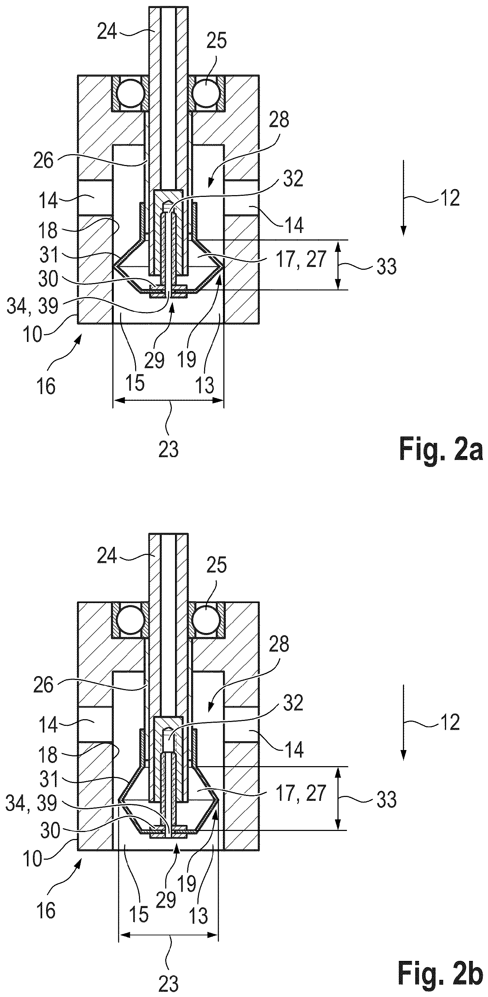

Fig. 2a und 2b zeigen eine Detailansicht des Ventilgehäuses 10 mit in dem Kältemittelkanal 13 angeordnetem Steuerelement 17. Das Steuerelement 17 ist als Spreizkörper 27 ausgebildet und umfasst einen ersten Abschnitt 28 umfassend das Führungsrohr 26 und einen zweiten Abschnitt 29 umfassend einen Gewindeniet 30. Zwischen dem Führungsrohr 26 und dem Gewindeniet 30 befindet sich ein Verformungsabschnitt 31. Eine Drehbewegung des Rotors 21 wird über die Rotorwelle 24 und ein Bewegungsgewinde 32 in eine axiale Bewegung des Gewindeniets 30 umgewandelt, so dass der Abstand zwischen dem ersten Abschnitt 28 und dem zweiten Abschnitt 29 und damit die axiale Länge 33 des Steuerelementes 17 verändert werden kann. Wird die axiale Länge 33 vergrößert, so nimmt der Durchmesser 23 des Verformungsabschnitts 31 des Steuerelements 17 ab, wird die axiale Länge 33 verringert, so nimmt der Durchmesser 23 des Verformungsabschnitts 31 des Steuerelementes 17 zu. In Fig. 2a ist das Steuerelement 17 mit minimaler axialer Länge 33 und entsprechend maximalem Durchmesser 23 gezeigt. Wie zu erkennen ist, ist der Steuerspalt 19 geschlossen und entsprechend auch das Kältemittelventil 100 geschlossen. In Fig. 2b ist das Steuerelement 17 mit maximaler axialer Länge 33 und entsprechend minimalem Durchmesser 23 gezeigt, sodass der Steuerspalt 19 und damit auch das Kältemittelventil 100 geöffnet ist. Für den Druckausgleich ist im Gewindeniet 30 eine kleine Öffnung 34 vorgesehen. Die Öffnung 34 ist ein mittiger Kanal 39 im Gewindeniet 30.

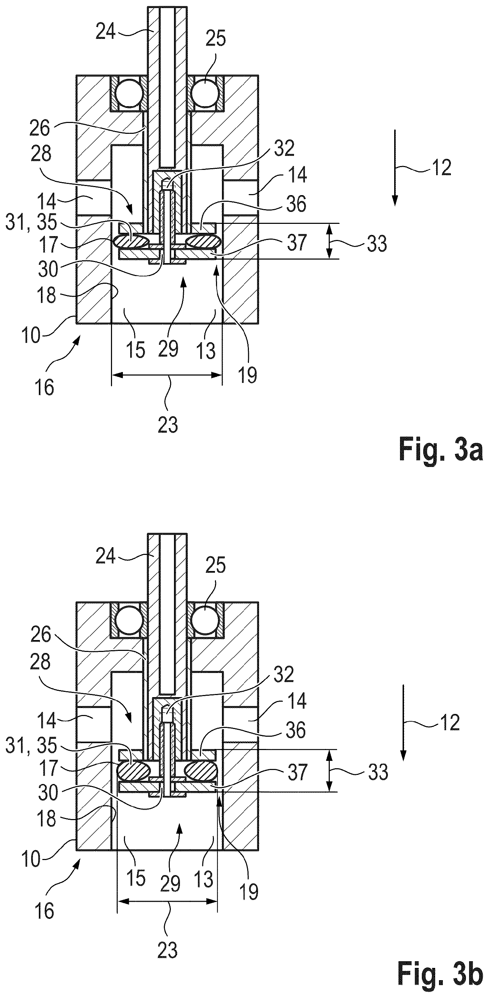

Eine Variante des Steuerelementes 17 ist in Fig. 3a und 3b gezeigt. Das Steuerelement 17 nach den Fig. 3a und 3b weist einen elastischen Quetschkörper 35 auf, welcher zwischen einer ersten Platte 36 und einer zweiten Platte 37 angeordnet ist. Die zweite Platte 37 ist mit dem Gewindeniet 30 verbunden und kann axial von dem Elektromotor 38 verfahren werden. Wird der Abstand zwischen der ersten Platte 36 und der zweiten Platte 37 verringert, so wird der Quetschkörper 35 zusammengedrückt, wodurch sich dessen Durchmesser 23 vergrößert, bis der Steuerspalt 19 geschlossen ist, wie in Fig. 3a gezeigt. Wird der Abstand zwischen der ersten Platte 36 und der zweiten Platte 37 vergrößert, so wird der Quetschkörper 35 entlastet und dessen Durchmesser 23 verringert sich. Dies ist in Fig. 3b gezeigt, in dem der Steuerspalt 19 geöffnet ist.

### Bezugszeichenliste

- 100: Kältemittelventil

- 10: Ventilgehäuse
- 11: Antrieb
- 12: Axialrichtung
- 13: Kältemittelkanal
- 14: Einlassöffnung
- 15: Auslassöffnung
- 16: Unteres Ende
- 17: Steuerelement
- 18: Innenwand
- 19: Steuerspalt
- 20: Stator
- 21: Rotor
- 22: Spalttopf
- 23: Durchmesser
- 24: Rotorwelle
- 25: Wälzlager
- 26: Führungsrohr
- 27: Spreizkörper
- 28: Erster Abschnitt
- 29: Zweiter Abschnitt
- 30: Gewindeniet
- 31: Verformungsabschnitt
- 32: Bewegungsgewinde
- 33: Axiale Länge
- 34: Öffnung
- 35: Quetschkörper
- 36: Erste Platte
- 37: Zweite Platte
- 38: Elektromotor
- 39: Kanal

## Patentansprüche

1. Kältemittelventil (100) umfassend ein Ventilgehäuse (10) und einen Antrieb (11), wobei das Ventilgehäuse (10) einen Kältemittelkanal (13) mit mindestens einer Einlassöffnung (14) und einer Auslassöffnung (15) für ein Kältemittel aufweist, wobei in dem Kältemittelkanal (13) ein Steuerelement (17) angeordnet ist, wobei zwischen dem Steuerelement (17) und einer Innenwand (18) des Kältemittelkanals (13) ein Steuerspalt (19) ausgebildet ist, **dadurch gekennzeichnet, dass** zur Steuerung des Steuerspalts (19) ein Durchmesser (23) des Steuerelementes (17) mittels des Antriebs (11) veränderbar ist.

2. Kältemittelventil (100) nach Anspruch 1, **dadurch gekennzeichnet, dass** das Steuerelement (17) eine axiale Länge (33) aufweist, wobei die axiale Länge (33) mittels des Antriebs (11) veränderbar ist, wobei eine Verringerung der axialen Länge (33) zu einer Vergrößerung des Durchmessers (23) des Steuerelementes (17) führt.

3. Kältemittelventil (100) nach Anspruch 1 oder 2, **dadurch gekennzeichnet, dass** der Kältemittelkanal (13) zylindrisch ist, und/oder dass der Kältemittelkanal (13) eine Bohrung ist.

4. Kältemittelventil (100) nach einem der vorgenannten Ansprüche, **dadurch gekennzeichnet, dass** das Steuerelement (17) einen ersten Abschnitt (28) und einen zweiten Abschnitt (29) aufweist, wobei zwischen dem ersten Abschnitt (28) und dem zweiten Abschnitt (29) ein Verformungsabschnitt (31) angeordnet ist, wobei der zweite Abschnitt (29) relativ zum ersten Abschnitt (28) mittels des Antriebs (11) verfahrbar ist.

5. Kältemittelventil (100) nach Anspruch 4, **dadurch gekennzeichnet, dass** der Antrieb (11) ein Elektromotor (38) mit einer Rotorwelle (24) ist, dass das Steuerelement (17) ein Bewegungsgewinde (32) umfasst, wobei das Bewegungsgewinde (32) eine Drehbewegung der Rotorwelle (24) in eine Axialbewegung des zweiten Abschnitts (29) umwandelt.

6. Kältemittelventil (100) nach Anspruch 5, **dadurch gekennzeichnet, dass** das Steuerelement (17), insbesondere der zweite Abschnitt (29), einen Niet, insbesondere einen Gewindeniet (30), umfasst, wobei der Niet von dem Bewegungsgewinde (32) axial bewegt wird, wobei der Niet bevorzugt verdrehfest mit dem Steuerelement (17) verbunden ist.

7. Kältemittelventil (100) nach einem der vorgenannten Ansprüche, **dadurch gekennzeichnet, dass** das Steuerelement (17) ein Spreizkörper (27) ist.

8. Kältemittelventil (100) nach einem der Ansprüche 5 bis 7, **dadurch gekennzeichnet, dass** das Steuerelement (17), insbesondere der erste Abschnitt (28), lagefest mit dem Ventilgehäuse (10) verbunden ist, wobei das Steuerelement (17), insbesondere der erste Abschnitt (28), bevorzugt ein Führungsrohr (26) umfasst, wobei das Führungsrohr (26) lagefest mit dem Ventilgehäuse (10) verbunden ist, wobei die Rotorwelle (24) in dem Führungsrohr (26) angeordnet ist.

9. Kältemittelventil (100) nach einem der vorgenannten Ansprüche, **dadurch gekennzeichnet, dass** das Steuerelement (17) ein Druckausgleichsmittel, insbesondere eine Öffnung (34) oder ein Druckausgleichsventil (100), umfasst, wobei das Druckausgleichsmittel bevorzugt in dem Niet angeordnet ist.

10. Kältemittelventil (100) nach einem der Ansprüche 4 bis 9, **dadurch gekennzeichnet, dass** der erste Abschnitt (28) eine erste Platte (36) umfasst, dass der zweite Abschnitt (29) eine zweite Platte (37) umfasst, und dass der Verformungsabschnitt (31) ein elastischer Quetschkörper (35) ist.
